# EUROPÄISCHE PATENTSCHRIFT

(11) **EP 1 880 437 B1**
(45) Veröffentlichungstag und Bekanntmachung des Hinweises auf die Patenterteilung: **14.03.2012**
(21) Anmeldenummer: 06742277.4
(22) Anmeldetag: 27.04.2006
(51) Int. Cl.: H01M 4/86, H01M 4/88, H01M 4/90, H01M 8/12, C04B 35/00

(54) **VERFAHREN ZUR HERSTELLUNG EINER KATHODE**
METHOD FOR PRODUCING A CATHODE
PROCEDE DE FABRICATION D'UNE CATHODE

(30) Priorität: 13.05.2005 DE 102005023048
(43) Veröffentlichungstag der Anmeldung: 23.01.2008
(73) Patentinhaber: Forschungszentrum Jülich GmbH, 52425 Jülich (DE)
(72) Erfinder: SERRA ALFARO, José Manuel, E-46019 Valencia (ES); UHLENBRUCK, Sven, 50259 Pulheim (DE); BUCHKREMER, Hans-Peter, 52525 Heinsberg (DE); STÖVER, Detlev, 52382 Niederzier (DE)
(86) Internationale Anmeldenummer: PCT/DE2006/000734
(87) Internationale Veröffentlichungsnummer: WO 2006/119725

(56) Entgegenhaltungen:
- US-A- 3 792 136
- US-A- 3 899 357
- US-A- 5 538 585
- US-A1- 2003 091 502
- US-A1- 2005 025 698

## Beschreibung

Die Erfindung betrifft ein Verfahren zur Herstellung einer Kathode, insbesondere einer Kathode für eine Hochtemperatur-Brennstoffzelle.

Brennstoffzellen können chemische Energie von Brennstoffen wie Wasserstoff unmittelbar in elektrische Energie umwandeln. Im Vergleich zur Stromgewinnung, bei der Brennstoffe verbrannt werden, sind daher deutlich größere Wirkungsgrade möglich. Ein Wirkungsgrad einer Brennstoffzelle kann im Vergleich zu einem konventionellen Verbrennungskraftwerk doppelt so groß sein. Mit einer Brennstoffzelle wird darüber hinaus besonders umweltfreundlich Strom erzeugt. Brennstoffe können flexibel eingesetzt werden. Brennstoffzellen sind u. a. aus der DE 100 33 898 A1 sowie der DE 100 61 375 A1 bekannt.

Brennstoffzellen sind sehr unterschiedlich aufgebaut und werden bei sehr unterschiedlichen Temperaturen betrieben. Entsprechend unterschiedlich werden Brennstoffzellen bezeichnet. Eine Brennstoffzelle, die bei sehr hohen Temperaturen von mehreren 100°C betrieben wird, wird Hochtemperatur-Brennstoffzelle genannt. Die Arbeitstemperaturen einer Hochtemperatur-Brennstoffzelle liegen in der Regel zwischen 600 und 950 °C.

Eine Brennstoffzelle umfasst eine Elektrolytschicht mit einer daran angrenzenden Anode auf der einen Seite und einer daran angrenzenden Kathode auf der anderen Seite. Eine Kathode übernimmt die Aufgabe, gasförmigen Sauerstoff in Oxidionen umzuwandeln und den Transport zum Elektrolyten zu ermöglichen. Um den Transport des Sauerstoffs durch die Kathode hindurch zu ermöglichen, ist diese porös und zwar derart, dass Gas durch die Kathode hindurch geleitet werden kann. Eine solche offenporige Kathode für Hochtemperatur-Brennstoffzellen wird in der DE 102 088 82 A1 beschrieben. Durch die poröse Struktur gelingt eine Oberflächenvergrößerung, die für einen hohen Gasumsatz von Vorteil ist.

Die aus dem Stand der Technik bekannten porösen Kathoden für Hochtemperatur - Brennstoffzellen bestehen aus dichten Partikeln mit einem durchschnittlichen Durchmesser größer als 400 nm. Hieraus resultiert eine Oberfläche einer Kathode von weniger als 5 Quadratmeter pro Gramm Kathodenmaterial. Die Kathode einer Hochtemperatur-Brennstoffzelle umfasst perowskitartige Kompositmaterialien wie LaₓSr_{y}MnO_{3-δ} und LaₓSr_{y}Fe_{1-z}Co_{z}O_{3-δ} oder aber Komposite, die neben perowskitartigen Materialien auch fluoridartige Materialien wie YₓZr_{1-y}O_{2-δ} und CeₓGd₁₋ₓO_{2-δ} umfassen. Geeignete Materialien werden in der DE 102 088 82 A2 beschrieben.

Aus US 2005/025698 A1 ist beispielsweise ein Verfahren zur Herstellung feinkörniger Partikel bekannt, wobei zunächst eine Mischung aus Metallsalzen, einem geeigneten Lösungsmittel und einem oberflächenaktiven Mittel hergestellt wird, im Weiteren Partikel aus dieser Mischung gebildet werden und anschließend das oberflächenaktive Mittel wieder entfernt wird.

Hochtemperatur-Brennstoffzellen weisen zwei besonders wichtige Nachteile auf:
- Die hohen Betriebstemperaturen erfordern den Einsatz von entsprechend temperaturbeständigen Materialien. Dies führt zu hohen Materialkosten und senkt die Betriebs-Lebensdauer einer solchen Brennstoffzelle. Die hohen Betriebstemperaturen erschweren einen mobilen Einsatz beispielsweise in einem Kraftfahrzeug oder aber den Einsatz im privaten Bereich.
- Die Energiedichte ist vergleichsweise gering.

Es ist Aufgabe der Erfindung, eine leistungsfähigere Hochtemperatur-Brennstoffzelle zu ermöglichen.

Durch die Erfindung können Kathoden mit einer deutlich größeren aktiven Oberfläche hergestellt werden. Die erreichbare Kathodenoberfläche liegt bei 15 bis 900 Quadratmeter pro Gramm Kathodenmaterial und übertrifft damit den Stand der Technik sehr deutlich. Da die aktive Oberfläche einer Hochtemperatur-Brennstoffzelle derzeit die Leistungsfähigkeit begrenzt, hat eine Vergrößerung der aktiven Oberfläche eine entsprechende Vergrößerung der Leistungsfähigkeit einer Brennstoffzelle zur Folge.

Durch Wahl von kleinen Durchmessern von eingesetzten Ausgangspulvern zur Herstellung der Kathode sowie durch Erzeugung von Poren im Pulver lassen sich große Oberflächen bei einer Kathode erzielen. Poren im Pulver werden erfindungsgemäß durch Füllstoffe erzeugt, die zu gegebener Zeit aus dem Pulver entfernt werden.

Verfahrensgemäß wird von löslichen Salzen von verschiedenen Metallen, einem Lösungsmittel und einem Füllstoff ausgegangen. Als Füllstoff werden in einer Ausführungsform hinreichend kleine Kohlenstoff-Partikel gewählt, da diese durch Verbrennen leicht zu gegebener Zeit entfernt werden können. Die Ausgangsstoffe werden geeignet gemischt. Sind die löslichen Salze zerfallen, werden Mischungen von Hydroxid- sowie Oxydpartikeln erzeugt, die den oder die Füllstoffe enthalten. Anschließend werden die Füllstoffe beispielsweise durch Verbrennen entfernt. Zu diesem Zweck werden die Hydroxid- sowie Oxydpartikel zum Beispiel thermisch behandelt, so zum Beispiel für einige Stunden kalziniert. Das resultierende Metalloxidpulver ist porös und bildet das Ausgangsmaterial für die Herstellung der Kathode.

Optional kann ein Plastifizierer als Ausgangsstoff zusätzlich vorgesehen sein. Dieser verbessert die Viskosität während des Mischens und Homogenisierens. Agglomerationen zwischen den Kohlenstoffpartikeln werden so vermindert. Dies beeinflusst positiv die endgültige Porosität.

Elektrochemische Prozesse, die in einer Kathode stattfinden, begrenzen die Leistungsfähigkeit einer Hochtemperatur - Brennstoffzelle. Es handelt sich dabei vor allem um solche Prozesse, die von der Oberfläche des katalytisch aktiven Materials einer Kathode abhängen wie Sauerstoffdiffusion, Sauerstoffdissoziation, Sauerstoffreduktion und Ionenleitfähigkeit der Oberfläche. Da durch die Erfindung eine deutliche Vergrößerung der aktiven Oberfläche einer Kathode gelungen ist, gelingt so auch eine deutlich verbesserte Leistungsfähigkeit einer Brennstoffzelle.

In einer vorteilhaften Ausführungsform der Erfindung werden poröse Pulver mit mittleren Durchmessern von 1 bis 30 nm erzeugt, um so zu Oberflächen bei einer Kathode von 15 bis 400 m²/g zu gelangen. Salze mit metallischen Komponenten werden zusammen mit Kohlenstoffpartikeln, bevorzugt Ruß, in einem Lösungsmittel miteinander vermischt. Die Salze umfassen vor allem auch Nitrate. Die Salze lösen sich dabei in dem Lösungsmittel. Die Kohlenstoffpartikel sind so gewählt, dass diese bevorzugt einen mittleren Durchmesser von 3 bis 25 nm aufweisen.

Die Mischung wird homogenisiert zum Beispiel durch mechanisches Rühren oder Ultraschallbehandlung, thermisch behandelt und getrocknet. Die Salze werden thermisch abgebaut und der nun in dem entstandenen Pulver befindliche Kohlenstoff verbrannt, so zum Beispiel bei Temperaturen zwischen 150 und 850°C in einem sauerstoffhaltigen Gas wie Luft, Sauerstoff, Ozon und/oder N₂O. Das Pulver wird auf einer gesinterten Elektrolytschicht aufgebracht, so zum Beispiel durch ein Siebdruckverfahren, durch ein Nasspulver-Sprühverfahren, durch Beschichtungsverfahren wie Tauchbeschichtung oder Spincoating (= Präparationsmethode, bei der der Schichtstoff auf ein sehr schnell rotierendes Substrat aufgebracht wird), durch Formgießverfahren, durch Bedampfung oder eine Kombination daraus. Durch thermische Behandlung bei 650°C bis 1200°C in einer sauerstoffhaltigen Atmosphäre wird so die Kathode mit einer Oberfläche von 15 bis 400 m²/g hergestellt. Die mittlere Größe der regelmäßig verteilten Poren liegt dann typischerweise bei 1 bis 30 nm. Es handelt sich um eine offenporige Struktur. Die Poren tragen insbesondere zu mehr als 70% zur Oberfläche der Kathode bei.

In einer anderen Ausführungsform der Erfindung werden Salze mit metallischen Komponenten zusammen mit einem oberflächenaktiven Stoff in einem Lösungsmittel miteinander vermischt. Die Salze umfassen dann vor allem Halogenide. Die Salze lösen sich dabei in dem Lösungsmittel.

Die Mischung wird homogenisiert und thermisch behandelt und getrocknet. Durch Zugabe einer basischen Lösung wird eine Fällung durchgeführt. Zunächst wird das Ergebnis thermisch bei Temperaturen zwischen minus 15°C und 100°C und anschließend bei Temperaturen von 75°C bis 250°C behandelt. Die Feststoffpartikel werden von der verbliebenen Flüssigkeit getrennt, so zum Beispiel durch Filterung, Sedimentation, Zentrifugieren oder eine Kombination daraus. Die nun in dem entstandenen Pulver befindlichen organischen Bestandteile werden verbrannt, so zum Beispiel bei Temperaturen zwischen 150 und 850°C in einem sauerstoffhaltigen Gas wie Luft, Sauerstoff, Ozon und/ oder N₂O. Das Pulver wird auf einer gesinterten Elektrolytschicht aufgebracht, so zum Beispiel durch Siebdruck, durch ein Nasspulver-Sprühverfahren, durch Beschichtungsverfahren wie Tauchbeschichtung oder Spincoating, durch Formgießverfahren (tape casting), Bedampfung oder eine Kombination daraus. Durch thermische Behandlung bei 650°C bis 1200°C in einer sauerstoffhaltigen Atmosphäre wird so die Kathode mit einer Oberfläche von 30 bis 900 m²/g hergestellt. Die Kathode weist gleichmäßig verteilte Poren mit einer mittleren Größe von 5 bis 80 Å auf. Die Größe der Poren kann unmodal oder bimodal verteilt sein. Die Poren tragen vor allem zu mehr als 80% zur Oberfläche der Kathode bei.

Als Lösungsmittel eignen sich besonders gut Wasser oder Ethanol. Es kommen aber auch andere Lösungsmittel wie Alkohole und Polyalkohole, Ether, Ketone, Alkane, Alkene und Mischungen von Lösungsmitteln in Betracht. Die Salze enthalten in einer Ausführungsform der Erfindung Nitrate, Halogenide, Sulfate, Azetat, Oxalat, Alkoxide, Acetylacetonat, Hydroxide, Zitrate oder Kombinationen daraus.

Als oberflächenaktiver Stoff eignet sich beispielsweise Polyoxyethylen-Alkyl-Ether, Polyoxyethylene-Polyoxypropylen-Triblock Copolymer, ein Alkylammoniumsalz mit einem Molekulargewicht von mehr als 100 D oder ein organisches Amin. Als basische Komponente für die Fällungsreaktion kommen Alkalimetallhydroxide, Alkalierdmetallhydroxide, Alkalimetallkarbonate, Ammoniak, Harnstoff, Purin, Pyrimidin, Anilin oder Kombinationen daraus in Betracht.

Eine erfindungsgemäß hergestellte Kathode kann aus folgenden Partikeln hergestellt sein bzw. diese Partikel umfassen:
- Ceroxid dotiert mit einem Gd, Sm, Pr, Nd, Er, Yb und / oder Dy und/oder
- Zirkonoxid dotiert mit Y, Sc, Ca, Mg, Al, Er, Yb, Gd, und/oder mit Elementen aus der Reihe Eu bis Dy und/oder
- Mischoxide mit La, Sr, Mn, Fe, Co, Cr, Pr, Ba, Ca, Ni, Cu, Ti, Y oder Elementen aus der Reihe Zr bis Ce.

Eine solche Kathode kann eine Perowskitstruktur, Fluorkalziumstruktur, Pyrochlorstruktur, Runddlesden-Popper-Oxid-Struktur oder einer Bronzestruktur aufweisen und mit Edelmetallen wie Pt, Pd, Rh, Au, Ru, Re, Ag, Ir oder eine Kombination daraus versehen sein. Der Anteil an Edelmetall in der Kathode beträgt vorzugsweise 0,1 bis 2,5 Gew.-%.

Die Salze umfassen bevorzugt Cer. Als Salz wird in einer Ausführungsform insbesondere ein Cernitrat als Ausgangsstoff eingesetzt. Es resultiert dann erfindungsgemäß eine Kathode auf Basis von CeO₂. Diese ist bevorzugt mit wenigstens einem Seltenen Erden Element dotiert. Das Material weist eine Fluoritstruktur auf und ist ein reiner Ionenleiter bei den in einer Hochtemperatur-Brennstoffzelle herrschenden Betriebstemperaturen. Der Dotierstoff erhöht vorteilhaft die gewünschte ionische Leitfähigkeit und stabilisiert vorteilhaft die kubische Fluoritstruktur. Insgesamt wird so eine Kathode bereitgestellt, die besonders gut Sauerstoffionen zu transportieren vermag.

Eine zusätzliche Dotierung des ZrO₂ mit einem anderen zweiten Elemente wie La, Sr, Mn, Fe, Co, Cr, Pr, Ba, Ca, Ni, Cu, Ti, Y, Zr bis Ce verbessert ebenfalls weiter den Transport von Sauerstoffionen und damit die Leistungsfähigkeit der Brennstoffzelle.

In einer Ausführungsform der Erfindung wird eine Perowskitstruktur ABO₃ der Kathode bevorzugt, um zu einer besonders guten katalytischen Aktivität für die Reduzierung des Sauerstoffs, einer besonders guten elektronischen Leitfähigkeit, Ionenleitfähigkeit sowie thermischen Stabilität zu gelangen. Typische Materialien sind LaSrMn oder LaSrFeCo. Teilweise werden vorteilhaft die Positionen A und B ersetzt durch Elemente wie Cr, Pr, Ba, Ca, Ni, Cu, Ti, Y, Zr oder Ce, um so die Leistungsfähigkeit der Kathode zu verbessern. Die Zugabe von Edelmetallen verbessert weiter die katalytische Aktivität in Bezug auf die Reduzierung von Sauerstoff.

### Ausführungsbeispiel 1

Es wird zunächst 4,6 g Cer (III) Nitrat und 1,19 g Gadolinium (III) Nitrat in 50 ml absolutes Ethanol gelöst. Anschließend wird 1 Gramm Kohlenschwarz oder Ruß (kommerziell erhältlich als "Black Pearls 2000 von der Cabot Corporation) mit einem mittleren Durchmesser von 12 nm hinzugefügt. Die Mischung wird in einem Glaskolben in einem Ultraschallbad zwei Stunden lang homogenisiert. Die sehr viskose Mischung wird danach bei einer Temperatur von 60°C für 24 Stunden gerührt bzw. gemischt. Anschließend wird ein Verdunsten zugelassen.

Der so erhaltene schwarze Feststoff wird anschließend für einen halben Tag in einem Ofen bei einer Temperatur von 175°C behandelt. Abschließend wird die Temperatur um 2°C pro Minute auf 550 °C erhöht und der Feststoff bei 550°C für sechs Stunden kalziniert.

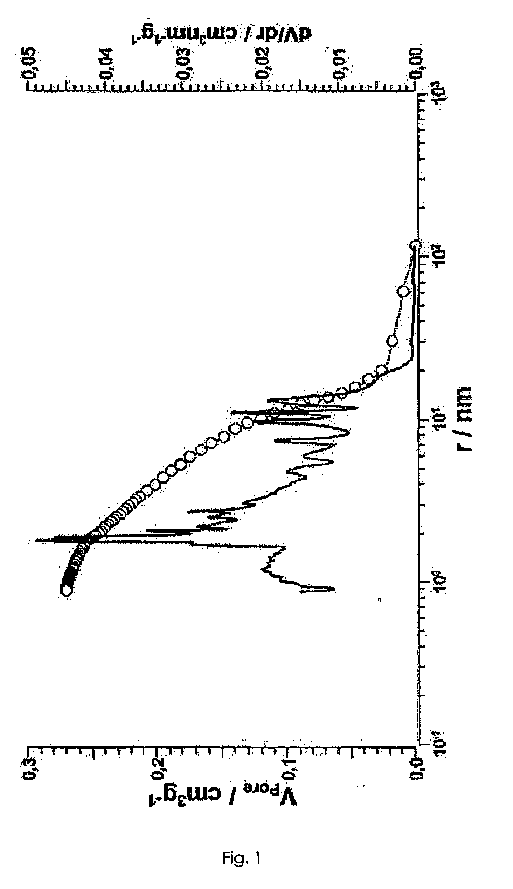

Es entsteht so ein hellgelbes Pulver, welches in einem Mörser gemahlen wird. Auf diese Weise wird ein Material mit einer Oberfläche von 90 Quadratmeter pro Gramm und einer Porenverteilung erhalten, die durch die Figur 1 wiedergegeben wird. Die durch Kreise gebildete Kurve ist der linken Achse zugeordnet. Diese Kurve zeigt das adsorbierte Stickstoffvolumen pro Gramm für jede Porengrößenfraktion. Die durchgehende Linie ist der rechten Achse zugeordnet. Diese beschreibt die Menge an Poren in Abhängigkeit von der Porengröße. Durch Ionenaustausch wird dem hellgelben Pulver ca. 1 Gew.-% Pd wie folgt hinzugefügt. 0,85 g des hellgelben Pulvers wird einer wässrigen Pd - Lösung für 20 Stunden bei 90°C ausgesetzt. Die wässrige Lösung umfasst 0,0002 Gew.-% Palladium (II) Nitrat. Anschließend wird der resultierende Feststoff gewaschen, getrocknet und für zwei Tage in einer Kugelmühle gemahlen.

1 Gramm des so erhaltenen Pulvers sowie durch Sprühtrocknung erhaltenes LaO_{0,65}Sr_{0,3}MnO₃ - Perowskitmaterial werden zusammen gemahlen. Es wird so ein Kompositpulver erhalten. Dieses Kompositpulver wird mit 2 g einer Lösung von Ethylcellulose in Terpineol (6 Gew.-%) gemischt und in einer 3-Walzen-Mühle gemahlen, bis so eine homogene Paste erhalten wird. Ein dünner Film dieser Paste mit einer anfänglichen Dicke von beispielsweise 73 µm wird auf der Oberseite eines Elektrolyten, so zum Beispiel eines gesinterten, flachen aus 8YSZ bestehenden Elektrolyten, aufgebracht und zwar zum Beispiel durch Siebdruck. Für 8 Stunden wird der Film getrocknet bei 60°C. Der Film wird zusammen mit dem Elektrolyten und vorteilhaft noch mit daran angebrachtem Anodenmaterial bei 920°C für drei Stunden kalziniert. Die Temperatur wird zur Erreichung der Endtemperatur um 3°C pro Minute erhöht und schließlich mit 5°C pro Minute wieder abgekühlt.

Als Anodensubstrat wird beispielsweise ein 8YSZ / NiO Cermet mit einer Funktionsschicht aus 8YSZ / NiO vorgesehen. Auf dem Anodensubstrat befindet sich dann die Elektrolytschicht und auf der Elektrolytschicht das erfindungsgemäß hergestellte Kathodenmaterial.

### Ausführungsbeispiel 2

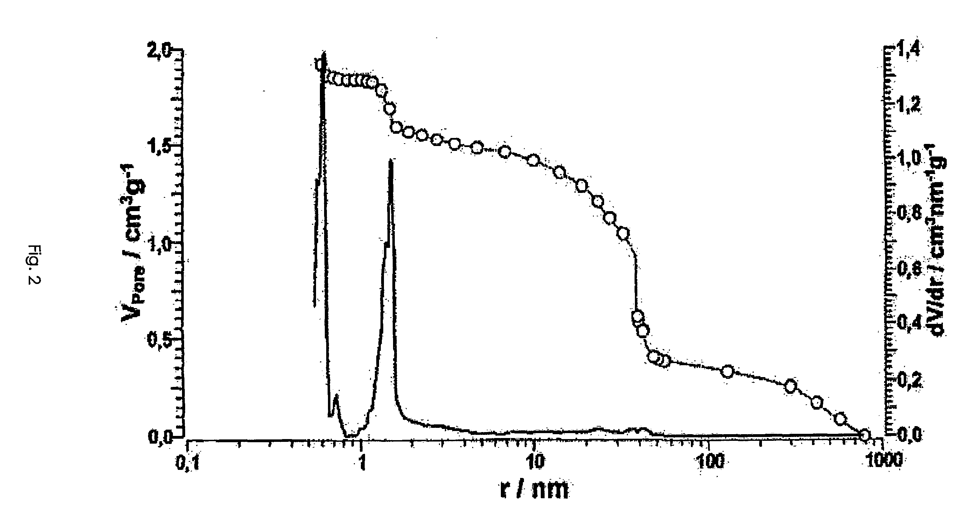

2 g Zyrkonylchlorid, 0,15 g Yttriumchlorid und 2 g Tensid Brij 76 (kommerziell unter diesem Handelsnamen erhältliches oberflächenaktives Mittel) werden in Wasser gelöst. Durch Rühren wird eine klare Lösung erhalten. Anschließend werden 50 ml einer geeigneten wässrigen Lösung (25 Gew.-%) hinzugefügt, um das in der Lösung enthaltene Zirkonium und Yttrium auszufällen. Als Lösung eignet sich ZrOCl2 und Ycl3 Hydrat in destilliertem Wasser gelöst, wobei schließlich der Anteil an Chloridsalz bei 2 Gew.-% liegt und das molare Verhältnis Zr/Y gleich 11,5 ist. Die so erhaltene Suspension wird in einem Kolben bei 50 °C fünf Stunden lang gerührt und anschließend bei 80 °C drei Tage lang. Durch anschließende Filtration wird ein weißes Pulver erhalten. Das weiße Pulver wird mit Wasser und Ethanol gewaschen. Anschließend wird das gewaschene weiße Pulver zunächst in einem Ofen bei 100 °C zehn Stunden lang getrocknet. Die Temperatur wird dann um 2°C pro Minute erhöht, bis 500 °C erreicht sind. Bei 500 °C wird das getrocknete weiße Pulver zwei Stunden lang kalziniert. Das so erhaltene YSZ1 - Pulver wird in einem Mörser gemahlen. Das gemahlene YSZ1 - Pulver weist eine Oberfläche von 650 m2/g und die in der Figur 2 gezeigte bimodale Verteilung der Porengröße mit mittleren Porengrößen von 12 Å und 32 Å auf. Die durch Kreise gebildete Kurve ist der linken Achse zugeordnet. Diese Kurve zeigt das adsorbierte Stickstoffvolumen pro Gramm für jede Porengrößenfraktion. Die durchgehende Linie ist der rechten Achse zugeordnet. Diese beschreibt die Menge an Poren in Abhängigkeit von der Porengröße.

1 Gew.-% Pd wird anschließend durch Ionenaustausch zum YSZ1 eingearbeitet. 0,85 g YSZ1 wird zu diesem Zweck einer wässrigen Lösung von Pd (0,0002 Gew.-% von Palladium (II) Nitrat) hinzugefügt und der Ionenaustausch 20 Stunden lang bei 90 °C durchgeführt. Der so erhaltene Festkörper YSZ2 wird gewaschen, getrocknet und zwei Tage lang in einer Kugelmühle gemahlen.

Anschließend wird eine Rasterdruck-Paste wie folgt aus dem YSZ2 hergestellt. 1 g YSZ2 sowie durch Sprühtrocknung erhaltenes La0_{0,65}Sr_{0,3}MnO₃ - Perowskitmaterial werden zusammen gemahlen. Es wird so ein Kompositpulver erhalten. Dieses Kompositpulver wird mit 2 g einer Lösung von Ethylcellulose in Terpineol (6 Gew.-%) gemischt und in einer 3-Walzen-Mühle gemahlen, bis so eine homogen Paste erhalten wird. Ein dünner Film dieser Paste mit einer anfänglichen Dicke von beispielsweise 73 µm wird auf der Oberseite eines Elektrolyten, so zum Beispiel eines gesinterten, flachen aus 8YSZ bestehenden Elektrolyten, aufgebracht und zwar zum Beispiel durch Siebdruck. Für 8 Stunden wird der Film getrocknet bei 60°C. Der Film wird zusammen mit dem Elektrolyten, zum Beispiel bestehend aus 8YSZ und vorteilhaft noch mit daran angebrachtem Anodenmaterial, wie zum Beispiel bestehend aus 8YSZ/NiO, bei 920°C für drei Stunden kalziniert. Die Temperatur wird zur Erreichung der Endtemperatur um 3°C pro Minute erhöht und schließlich mit 5°C pro Minute wieder abgekühlt. Es resultiert eine Brennstoffzelle.

Durch Variation von jeweiligen Behandlungsdauern und Temperaturen wird die Oberfläche, die schließlich bei den Kathoden erhalten wird, eingestellt. Die Oberfläche kann so innerhalb der angegebenen Bereiche verändert werden.

## Patentansprüche

1. Verfahren zur Herstellung einer Kathode mit den Schritten:
- es wird eine Mischung aus löslichen Metallsalzen, einem Lösungsmittel für die Salze und Kohlenstoffpartikel als Füllstoff hergestellt,
wobei die Kohlenstoffpartikel einen mittleren Durchmesser von 3 bis 25 nm aufweisen,
- aus der Mischung, umfassend die Kohlenstoffpartikel und in der Lösung gelöste Metallsalze werden durch thermische Behandlung oder durch Fällung Metalloxidpartikel hergestellt,
- die Kohlenstoffpartikel werden durch Verbrennung aus den Metalloxidpartikeln entfernt,
- die porösen Metalloxidpartikel werden auf eine gesinterte Elektrolytschicht aufgebracht und thermisch behandelt, wobei eine Kathode entsteht.

2. Verfahren nach Anspruch 1,
- bei dem die Kohlenstoffpartikel durch Verbrennung bei Temperaturen zwischen 150 und 850 °C in einem sauerstoffhaltigen Gas aus den Partikeln entfernt werden,
- bei dem der gesinterte Elektrolyt mit den aufgetragenen porösen Partikeln thermisch bei einer Temperatur zwischen 650 und 1200 °C unter Gas behandelt wird.

3. Verfahren nach Anspruch 1 oder 2, bei dem das Lösungsmittel Alkohol, Polyalkohol, Wasser oder Ethanol ist.

4. Verfahren nach einem der vorhergehenden Ansprüche, bei dem die Salze Alkoxide, Zitrate, Acetate, Halogenide oder Nitrate umfassen.

## Claims

1. Method for producing a cathode with the steps:
- a mixture of soluble metal salts, a solvent for the salts and carbon particles is produced as a filler,
in which the carbon particles have an average diameter of 3 to 25 mm,
- metal oxide particles are produced from the mixture, comprising carbon particles und metal salts dissolved in the solution, by heat treatment or precipitation,
- the carbon particles are removed from the metal oxide particles by combustion,
- the porous metal oxide particles are applied to a sintered electrolyte layer and heat treated, in which a cathode is produced.

2. Method according to claim 1,
- in which the carbon particles are removed from the particles by combustion at temperatures of between 150 and 850° C in a gas containing oxygen,
- in which the sintered electrolyte with the porous particles applied is heat treated at a temperature of between 650 and 1200° C under gas.

3. Method according to claim 1 or 2, in which the solvent is alcohol, polyalcohol, water or ethanol.

4. Method according to one of the previous claims, in which the salts comprise alkoxides, citrates, acetates, halogenides or nitrates.

## Revendications

1. Procédé de production d'une cathode, comprenant les étapes suivantes :
- on produit un mélange de sels métalliques solubles, d'un solvant pour les sels et de particules de carbone en tant que matériau de charge,
les particules de carbone présentant un diamètre moyen de 3 à 25 nm,
- à partir du mélange comprenant les particules de carbone et les sels métalliques dissous dans la solution, on produit par traitement thermique ou par précipitation, des particules d'oxyde métallique,
- les particules de carbone sont éliminées par combustion des particules d'oxyde métallique,
- les particules d'oxyde métallique poreuses sont placées sur une couche d'électrolytes frittée et traitées thermiquement, une cathode étant ainsi obtenue.

2. Procédé selon la revendication 1
- dans lequel les particules de carbone sont éliminées des particules par combustion à des températures entre 150 et 850 °C dans un gaz contenant de l'oxygène,
- dans lequel l'électrolyte fritté comportant les particules poreuses appliquées est traité thermiquement à une température entre 650 et 1200 °C sous atmosphère gazeuse.

3. Procédé selon la revendication 1 ou 2, dans lequel le solvant est un alcool, un polyalcool, de l'eau ou de l'éthanol.

4. Procédé selon l'une des revendications précédentes, dans lequel les sels comprennent des alcoxydes, des citrates, des acétates, des halogénures ou des nitrates.
